# EUROPEAN PATENT APPLICATION

(11) **EP 0 644 383 A1**
(43) Date of publication of application: **22.03.1995**
(21) Application number: 94202690.7
(22) Date of filing: 19.09.1994
(51) Int. Cl.: F24H 9/12, B29C 33/52

(54) **Intergrated unit for use in a heating apparatus**

(30) Priority: 17.09.1993 EP 93202685
(71) Applicant: ATAG VERWARMING B.V., NL-7131 PE Lichtenvoorde (NL)
(72) Inventor: Hezemans, Ronald Hubertus Theodorus Maria, NL-7064 HV Silvolde (NL)
(74) Representative: Schumann, Bernard Herman Johan

(57) **Abstract**

The invention relates to a unit for use in a heating apparatus for heating a room area and/or tap water, which unit comprises a number of components mutually connected by pipes, for instance a valve, a pump, a filter, a connector and a venting device, or a plurality or combinations thereof.

Such a unit is known.

The known unit is embodied as a metal panel.

The invention now provides a unit of the said type which has the feature that the unit is formed in plastic by applying the "metal core" technique, and
pipes and any components or parts thereof are coupled non-releasably to each other and the unit is thus formed integrally.

By embodying the unit in plastic, optionally reinforced plastic, it is possible to also include tap water pipes in the unit.

## Description

The invention relates to a unit for use in a heating apparatus for heating a room area and/or tap water, which unit comprises a number of components mutually connected by pipes, for instance a valve, a pump, a filter, a connector and a venting device, or a plurality or combinations thereof.

Such a unit is known.

In the known art all necessary components are fixed to the unit. This fixing can for instance take place with a quick-acting closure or rapid-action coupling. Components suitable herefor are for example valves, pumps, connectors and venting devices.

The known unit is embodied as a metal panel.

The invention now provides a unit of the said type which has the feature that the unit is formed in plastic by applying the "metal core" technique, and
pipes and any components or parts thereof are coupled non-releasably to each other and the unit is thus formed integrally.

By embodying the unit in plastic, optionally reinforced plastic, it is possible to also include tap water pipes in the unit. With the known art this is not possible, as the tap water circuit is not closed and the panel would break down in the course of time as a result of corrosion. An additional problem is that in many countries the authorities responsible for providing drinking water object to this application.

These stated drawbacks are peculiar to the use of metal. The use of plastic as according to the invention obviates these drawbacks.

For the sake of completeness attention is drawn to the fact that the mentioned "metal core" technique is known. According to this method use is made for manufacturing plastic components which are complicated and/or provided with undercuts of a metal core pre-formed for instance by injection moulding and having the form, in any case the inner form, of the plastic component for manufacture. The metal has a melting point which is considerably lower than the softening temperature of the plastic. By heating to just above the melting temperature of the metal the latter will melt and can be discharged for instance by the thermal oil used, whereby the plastic component results. Practically all the metal can later be recovered for re-use. Complicated and undercut forms can in this way also be manufactured with simple techniques.

The use of plastic has the further advantage that plastic generally has a considerably lower heat conduction than the metals employed for the units in the prior art. Particularly in the field of heating apparatus a thermal separation of the different pipes can be of great importance.

Plastic further has the advantage of a small weight, while the mechanical strength is nevertheless sufficiently great.

By integrating at least parts of the said components according to the invention these latter can become less expensive, since only the so-called "core parts" such as moving parts, a cover and the like, are additionally required. In addition, the number of rapid-action couplings can be smaller, whereby there will be less danger of leakages and cost-saving will be possible.

In a specific embodiment the unit has the special feature that the plastic is of a non-toxic type for use with tap water, for instance polyethylene, polypropylene, ABS.

Particular zones may be subjected to permanent mechanical load. These are for instance zones where fastening bolts are connected to the unit. In order to prevent creep in the plastic at such zones, use can advantageously be made of an embodiment in which the plastic is fibre-reinforced, for example with glass fibres.

In order to expose the plastic as little as possible to thermal influence, which can enhance production accuracy, the embodiment is recommended in which use is made in the metal core technique of an eutectic alloy.

Very good results are obtained with an embodiment in which the alloy contains bismuth.

In a simpler embodiment the unit has the special feature that use is made of substantially pure bismuth.

In order to define the concept it is noted that a per se known eutectic bismuth alloy has a melting point in the order of magnitude of 90°C. Typical plastics have a softening range located in the order of around 200°C. By heating the core to for instance 100°C making use of thermal oil or induction heating, the core can melt and thus be discharged without the plastic being affected.

It is recommended to cool the metal core prior to injection of the plastic into the mould. This cooling can result in an initial temperature of the core of about -10°C. The heat transmitted to the core by the plasticized plastic injected into the mould is then, also due to the good heat conduction of the metal core, in any case insufficient to cause melting of even the skin zone thereof.

The annexed drawing shows in perspective view by way of random example a unit 1 according to the invention. This unit comprises a number of tubular pipes and components. Several of these will be named hereinbelow. It is noted that it is apparent from this drawing that the unit according to the invention can possess a three-dimensional spatial structure. Unit 1 comprises a flange connection 2 for a heat exchanger, a feed pipe 3 from a boiler, a feed pipe 4 for a central heating, a return pipe 5 for the central heating, a connection 6 for a valve, a connection 7 for a safety valve, two pump housing parts 8 and 9, a housing 10 for a non-return valve, a return pipe 11 for a boiler, a flange connection 12 for the pipe 11, a support plate 13, a flange connection 14 for an expansion vessel and a filter housing 15.

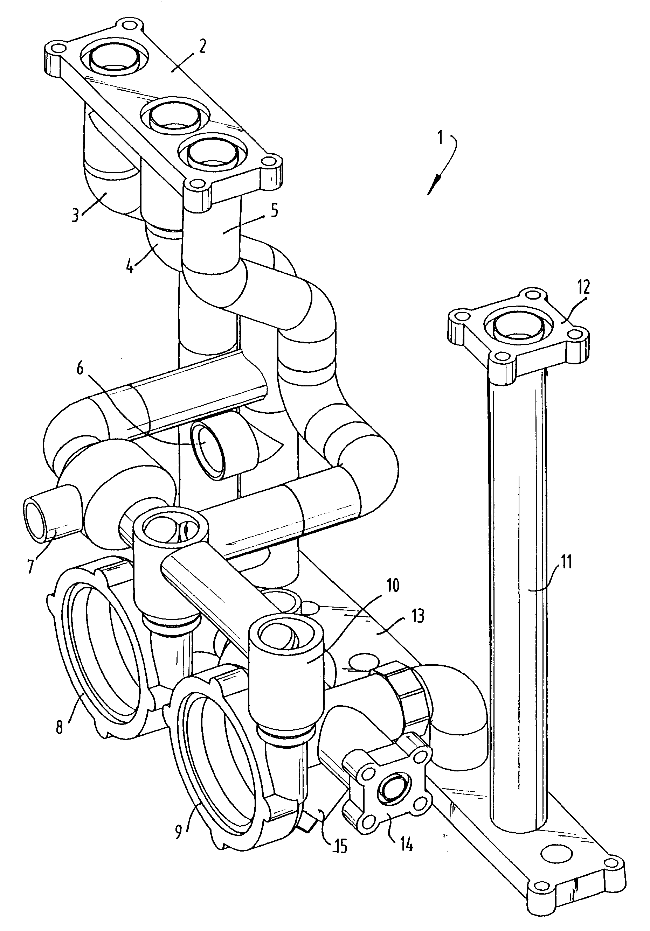

## Claims

1. Unit for use in a heating apparatus for heating a room area and/or tap water, which unit comprises a number of components mutually connected by pipes, for instance a valve, a pump, a filter, a connector and a venting device, or a plurality or combinations thereof,
**characterized in that**
the unit is formed in plastic by applying the "metal core" technique, and
pipes and any components or parts thereof are coupled non-releasably to each other and the unit is thus formed integrally.

2. Unit as claimed in claim 1, **characterized in that** the plastic is of a non-toxic type for use with tap water, for instance polyethylene, polypropylene, ABS.

3. Unit as claimed in claim 1, **characterized in that** the plastic is fibre-reinforced, for example with glass fibres.

4. Unit as claimed in claim 1, **characterized in that** use is made in the metal core technique of an eutectic alloy.

5. Unit as claimed in claim 1, **characterized in that** the alloy contains bismuth.

6. Unit as claimed in claim 1, **characterized in that** use is made of substantially pure bismuth.
